# EUROPEAN PATENT APPLICATION

(11) **EP 4 844 502 A1**
(43) Date of publication of application: **25.11.2026**
(21) Application number: 25300063.2
(22) Date of filing: 19.05.2025
(51) Int. Cl.: G05B 13/02

(54) **ONLINE SAFETY EVALUATION OF LLMS IN INDUSTRY USING DIGITAL TWINS**

(71) Applicant: ABB SCHWEIZ AG, 5400 Baden (CH)
(72) Inventor: Habib, Andrew, 63329 Egelsbach (DE); Tamascelli, Nicola, 68259 Mannheim (DE); Tan, Ruomu, 68309 Mannheim (DE); Nakas, Georgios, 68161 Mannheim (DE); Schoch, Nicolai, 69120 Heidelberg (DE); Borrison, Reuben, 68782 Brühl (DE)
(74) Representative: Maiwald GmbH

(57) **Abstract**

There is disclosed a method for evaluating a safety of a recommendation generated by an Al-based model in an industrial context. The method comprises obtaining (S310) the recommendation generated by the Al-based model, wherein the recommendation is related to an event occurred at a first industrial plant. The method further comprises applying (S320) the recommendation at a digital twin of the first industrial plant by simulating an application of the recommendation with the digital twin. The method further comprises obtaining (S330) a simulated outcome as a result from the simulating. The method further comprises evaluating (S340), in a first evaluating process, the safety of the recommendation based on the simulated outcome.

## Description

### FIELD OF THE INVENTION

The invention relates to methods for evaluating the safety of a recommendation generated by an Al-based model in an industrial context. Moreover, the invention relates to a data processing apparatus, to a computer-readable medium, to a computer program product and to a use of a digital twin for evaluating a safety of a recommendation generated by an Al-based model in an industrial context.

### BACKGROUND

In an industrial context, the increasing use of Generative artificial intelligence (Al) and more specifically of large language models (LLMs) in industry poses new challenges, particularly in safety critical environments. While Al-based models, like LLMs or LLM-based systems for example, can provide recommendations and assist operators with various processes, their suggestions could have unsafe consequences, if taken into account without proper evaluation and risk assessment. The pre-trained knowledge of Al-based models and any safety protocols may not be enough to provide contextual awareness and cover all the operational scenarios.

The above-described issues highlight the need, in particular in an industrial context, for increasing a safety of recommendations made by an Al-based model. Hence, in an industrial context, there is the problem of how to increase a safety of a recommendation generated by an Al-based model? Hence, there is room and need for improvement.

### SUMMARY

In view of the above, it is an object of the present disclosure to overcome at least part of the drawbacks available regarding the safety of recommendations made by a LLM-based system in an industrial context.

Therefore, to address one or more of these drawbacks, there is provided, in a first aspect, a method for evaluating a safety of a recommendation generated by an artificial intelligence (AI) -based model in an industrial context. The method comprises obtaining the recommendation generated by the Al-based model, wherein the recommendation is related to an event occurred at a first industrial plant. The method further comprises analyzing historical data. The historical data are indicative of one or more historical events occurred at one or more industrial plants and/or indicative of one or more historical actions related to historical events occurred at the one or more industrial plants. The analyzing the historical data comprises: identifying a historical event of the one or more historical events that is similar to the event and/or identifying a historical action of the one or more historical actions that is similar to the recommendation. The analyzing the historical data further comprises: identifying a first historical outcome resulting from the historical event and/or identifying a second historical outcome resulting from the historical action. And the method further comprises evaluating the safety of the recommendation based on at least one of the first historical outcome and the second historical outcome.

The method may be at least in parts computer-implemented. Preferably, the method is computer-implemented.

The Al-based model may be, for example without being limited to that, a Large Language Model (LLM) -based system.

The term "safety" as used herein is to be understood in a broad way. For example, by "safety" it may be meant a safety requirement, a safety level, a safety classification or one or more predetermined safety limits, for example. For example, it may be evaluated, whether a safety of a recommendation violates a predetermined safety limit, safety condition or safety requirement, so that an alarm may be issued or is likely to be issued, or so that problems or alarms are to be expected or are likely to be expected during an operation of an industrial plant and/or in a production process of a product.

The term "recommendation" as used herein is to be understood in a broad way. For example, by "recommendation" it may be meant a recommendation of action, like for example to adjust, replace and/or add one or more parameters of an industrial drive. For example, such parameters may comprise operational parameters like temperature values, pressure values, durations, increase/decrease rates, velocities, energy consumption, etc.

Moreover, such parameters may comprise manufacturing parameters, like the characteristics of one or more materials used in a production or manufacturing process or composition parameters of one or more production materials, for example. Furthermore, such parameters may comprise procedural or processing parameters, like a sequence of one or more processing steps. A parameter may be associated with one or more of the operational parameters, manufacturing parameters and processing parameters.

The term "event" as used herein is to be understood in a broad way. For example, by "event" it may be meant an alarm or anomaly detection, an input made by a user or a result of a regular or instructed state-scanning-, state-analyzing- or state-determination-procedure performed by the industrial plant or part thereof, or by a control device that controls or monitors the industrial plant or part thereof.

The term "action" as used herein is to be understood in a broad way. For example, by "action" it may be meant that one or more of at least one of the operational parameters, manufacturing parameters and processing parameters is adjusted, removed and/or added. For example, a temperature in a tank may be increased, a temperate increase rate may be increased, an additional processing step of reducing a pressure value to a predetermined value may be added, etc.

The method according to the first aspect is advantageous in several ways. For example, it is enabled to evaluate in a dynamic way potential risks before their application in practice. Thus, a safety in the application of Al-based recommendations is increased. Moreover, the evaluation of the safety of the recommendation can be operated in real-time, allowing operators to quickly assess the Al-generated recommendations. This may allow to reduce the burden on human experts who would otherwise have to manually evaluate the safety of each Al-generated recommendation. Furthermore, it is enabled to help industries to comply with recommendations and standards for Al-based models or systems.

According to several examples of the present disclosure, the method may further comprise analyzing risk assessment data, wherein the risk assessment data are indicative of one or more risks associated with the one or more historical events and/or indicative of one or more risks associated with the one or more historical actions. Further, evaluating the safety of the recommendation may comprise evaluating the safety of the recommendation based on the risk assessment data and at least one of the first historical outcome and the second historical outcome.

The term "risk assessment data" as used herein is to be understood in a broad way. For example, by "risk assessment data" it may be meant data that may be used to assess one or more potential risks that may result from a certain event and/or from a certain action. For example, the risk assessment data may comprise that for the action of increasing an upper temperature limit for a temperature to be measured inside a tank, there are several risks. For example, risk 1, a pressure in the tank may violate an alarm pressure value, risk 2, an output product provided by the tank may comprise an undesired composition of material components, or risk 3, an additional cooling step may be required for the output product provided by the tank before the output product may be further processed in a subsequent processing step. Additionally, each of these risks may be associated with a probability value or probability range that this risk may occur. For example, a probability for risk 1 to occur may be 15%, a probability for risk 2 to occur may be 5%, a probability for risk 3 to occur may be 30%, and probability for no risk to occur may thus be 60%.

Hence, due to the usage of such risk assessment data, the safety of the recommendation may be evaluated more reliably, more accurately and/or in more detail.

According to several examples of the present disclosure, evaluating the safety may further comprise: evaluating the safety of the recommendation based on the first historical outcome if the result of the analyzing includes the similar historical event, and optionally, if a safety associated with the similar historical event is in a predetermined safety range; and/or evaluating the safety of the recommendation based on the second historical outcome if the result of the analyzing includes the similar historical action, and optionally, if a safety associated with the similar historical action is in a predetermined safety range.

The risk assessment data may be indicative of the predetermined safety range.

The expression "in a predetermined safety range" may also be understood as "above a predetermined minimum safety threshold" for example. Said in other words, a predetermined safety threshold should not be violated. For example, as provided for explanation purposes, a predetermined safety threshold, like "medium safety", should not be reached or the safety should not go lower than "medium safety". For example, the safety may be classified into two or more classes, like low safety, medium safety and high safety, for example. The predetermined safety range may be represented by the class "high safety" or may be represented by the classes "medium safety" and "high safety". The predetermined minimum safety threshold may be the threshold between different classes, for example between "medium safety" and "high safety" or between "low safety" and "medium safety", for example. Additionally or alternatively, instead of different safety classes, safety values may be considered. For example, a safety value may be a value in a range from zero to 100, wherein the predetermined safety range may correspond to a safety value of 50, for example. Hence, a "safety" as outlined above may also be understood as comprising or corresponding to a "safety value".

Hence, a linkage to a historical event or action is ensured, and the reliability of a safety evaluation is thus increased.

According to several examples of the present disclosure, the method may further comprise: if the result of the analyzing comprises that no similar historical event has been identified and that no similar historical action has been identified, applying the recommendation at a digital twin of the first industrial plant by simulating an application of the recommendation with the digital twin; obtaining a simulated outcome as a result from the simulating; and evaluating the safety of the recommendation based on the simulated outcome.

Additionally or alternatively, according to several examples of the present disclosure, the method may further comprise: applying the recommendation at a digital twin of the first industrial plant by simulating an application of the recommendation with the digital twin; obtaining a simulated outcome as a result from the simulating; and evaluating the safety of the recommendation based on the simulated outcome. Hence, the if-feature "if the result of the analyzing comprises that no similar historical event has been identified and that no similar historical action has been identified" may be optional. In doing so, i.e. in case the if-feature is avoided or omitted, according to the first aspect, there may be a first evaluating result resulting from "evaluating the safety of the recommendation based on the risk assessment data and at least one of the first historical outcome and the second historical outcome" and a second evaluating result resulting from "evaluating the safety of the recommendation based on the simulated outcome". Hence, according to several examples of the present disclosure, the method may comprise a further evaluating step of further evaluating the safety of the recommendation based on comparing the first evaluating result and the second evaluating result.

By simulating the application of the recommendation with or at the digital twin, it may be meant that the recommendation is applied at the digital twin and that a result of such application is simulated and may thus be evaluated. The digital twin may be an exact digital reproduction of the industrial plant, said in other words, the digital twin may represent an accurate virtual representation of the physical industrial setting.

By further evaluating it may be meant that the first evaluating result and the second evaluating result may be compared in view of one or more predetermined criteria. For example, which solution reaches a desired state and/or which solution solves a certain problem more quickly, more reliably, more efficiently or more safely.

Hence, an improved basis of result is obtained, and the reliability of a safety evaluation is thus increased.

Moreover, according to a second aspect, there is provided a method for evaluating a safety of a recommendation generated by an Al-based model in an industrial context. The method comprises obtaining the recommendation generated by the Al-based model, wherein the recommendation is related to an event occurred at a first industrial plant. The method further comprises applying the recommendation at a digital twin of the first industrial plant by simulating an application of the recommendation with the digital twin. The method further comprises obtaining a simulated outcome as a result from the simulating. And the method further comprises evaluating, in a first evaluating process, the safety of the recommendation based on the simulated outcome.

The method may be at least in parts computer-implemented. Preferably, the method is computer-implemented.

It shall be noted that terms and expressions used in relation to the second aspect that are also used in relation to the first aspect, are to be understood as outlined-above in relation to the first aspect.

The method according to the second aspect is advantageous in several ways. For example, it is enabled to evaluate in a dynamic way potential risks before their application in practice. Thus, a safety in the application of Al-based recommendations is increased. Moreover, the evaluation of the safety of the recommendation can be operated in real-time, allowing operators to quickly assess the Al-generated recommendations. This may allow to reduce the burden on human experts who would otherwise have to manually evaluate the safety of each Al-generated recommendation. Furthermore, it is enabled to help industries to comply with recommendations and standards for Al-based models or systems. Additionally, due to a possibility of dual-layer risk assessment of historical database analysis and digital twin simulation, the accuracy of the safety evaluation (i.e. risk evaluation) could even further be enhanced.

According to several examples of the present disclosure, the method according to the second aspect may further comprise analyzing historical data. The historical data may be indicative of one or more historical events occurred at one or more industrial plants and/or indicative of one or more historical actions related to historical events occurred at the one or more industrial plants. The analyzing the historical data may comprise: identifying a historical event of the one or more historical events that is similar to the event and/or identifying a historical action of the one or more historical actions that is similar to the recommendation. The analyzing the historical data may further comprise: identifying a first historical outcome resulting from the historical event and/or identifying a second historical outcome resulting from the historical action. The method according to the second aspect may further comprise evaluating, in a second evaluating process, the safety of the recommendation based on at least one of the first historical outcome and the second historical outcome; and further evaluating the safety of the recommendation based on comparing a result of the first evaluating process with a result of the second evaluating process.

Optionally, the second evaluating process may comprise evaluating the safety of the recommendation based on at least one of the first historical outcome if a safety associated with the first historical outcome is in a predetermined safety range and the second historical outcome if a safety associated with the second historical outcome is in a predetermined safety range.

It shall be noted that the order of processing steps is not limited to the above-given example. Said in other words, although it is outlined above that the first evaluating process is conducted first and that the second evaluating process is conducted second, this order may be changed and the first evaluating process may be conducted second and that the second evaluating process may be conducted first or both evaluating processes may be conducted in parallel.

Hence, an improved basis of result is obtained, and the reliability of a safety evaluation is thus increased.

According to several examples of the present disclosure, the method may further comprise analyzing risk assessment data, wherein the risk assessment data are indicative of one or more risks associated with the one or more historical events and/or indicative of one or more risks associated with the one or more historical actions. Further, evaluating the safety of the recommendation may comprise evaluating the safety of the recommendation based on the risk assessment data and at least one of the first historical outcome and the second historical outcome.

The risk assessment data may be indicative of the above-mentioned predetermined safety range.

Optionally, evaluating the safety of the recommendation may comprise evaluating the safety of the recommendation based on the risk assessment data and at least one of the first historical outcome and the second historical outcome.

Hence, due to the usage of such risk assessment data, the safety of the recommendation may be evaluated more reliably, more accurately and/or in more detail.

According to several examples of the present disclosure, in view of the first aspect and the second aspect, the one or more industrial plants may comprise at least one of the first industrial plant and a second industrial plant different from the first industrial plant.

Hence, safety evaluations are also possible for different industrial plants, even for start-up of a new industrial plant.

According to several examples of the present disclosure, in view of the first aspect and the second aspect, a historical event that is similar to the event may comprise at least one of:
- the historical event is associated with a same error code as the event,
- the historical event is associated with a same alarm as the event,
- the historical event is associated with a same sequence of alarms as the event,
- the historical event is associated with a same time series behavior as the event, for example a time series behaviour of one or more components of the industrial plant and/or of one or more parameters associated with the industrial plant, like key performance indicators, operational parameters, manufacturing parameters and processing parameters for example,
- the historical event is associated with a same industrial plant component as the event,
- the historical event is associated with a same pressure increase as the event, for example a same amount within a same time period,
- the historical event is associated with a same pressure decrease as the event, for example a same amount within a same time period,
- the historical event is associated with a same temperature increase as the event, for example a same amount within a same time period,
- the historical event is associated with a same temperature decrease as the event, for example a same amount within a same time period,
- the historical event is associated with a same processing step as the event, for example a processing step in a sequence of processing steps for manufacturing a certain product,
- the historical event is associated with a same sequence of processing steps as the event, and
- the historical event is associated with a same semantic as the event.

According to several examples of the present application, it shall be noted with reference to directly above, that the term "same" is not necessarily to be understood as "identical" or "equal". Rather, by the term "same" as used directly above, it may also be comprised a predetermined deviation amount, for example a deviation by 1% or less, by 2% or less, by 5% or less, or by 10% or less, for example. Thus, in the examples as outlined directly above, the term "same" may also be understood as "similar", as long as a predetermined deviation amount is not exceeded, for example a deviation of 1%, of 2%, of 5% or of 10%, for example. For example, the expression "a same amount within a same time period" may also be understood as an amount that deviates from a reference amount by less than a predetermined deviation amount, for example by less than 5%. Additionally or alternatively, it may also be comprised of a time period that deviates from a reference time period by less than the same or another predetermined deviation amount, for example by less than 3%. Same error codes may also comprise different error codes that relate to a same component or to a same classification of error codes, for example error codes that are related to a temperature in a tank. Same alarms may also comprise different alarms that relate to a same component or to a same classification of alarms, for example alarms that are related to a temperature in a tank. Different parameters values may be considered as "same" as long as a predetermined deviation amount is not exceeded. Different time period durations may be considered as "same" as long as a predetermined deviation amount is not exceeded. Same processing steps may be processing steps where a same general action is performed, like a temperature increasement, as long as the different temperature increasements in different processing steps deviate by less than a predetermined deviation amount from each other.

Hence, different criteria may be considered to increase the reliability of safety evaluations.

According to several examples of the present disclosure, in view of the first aspect and the second aspect, a historical action that is similar to the recommendation may comprise at least one of:
- the historical action is associated with a same error code as the recommendation,
- the historical action is associated with a same alarm as the recommendation,
- the historical action is associated with a same sequence of alarms as the recommendation,
- the historical action is associated with a same time series behavior as the recommendation, for example a time series behaviour of one or more components of the industrial plant and/or of one or more parameters associated with the industrial plant, like key performance indicators, operational parameters, manufacturing parameters and processing parameters for example,
- the historical action is associated with a same industrial plant component as the recommendation,
- the historical action is associated with a same pressure increase as the recommendation, for example a same amount within a same time period,
- the historical action is associated with a same pressure decrease as the recommendation, for example a same amount within a same time period,
- the historical action is associated with a same temperature increase as the recommendation, for example a same amount within a same time period,
- the historical action is associated with a same temperature decrease as the recommendation, for example a same amount within a same time period,
- the historical action is associated with a same processing step as the recommendation, for example a processing step in a sequence of processing steps for manufacturing a certain product,
- the historical action is associated with a same sequence of processing steps as the recommendation, and
- the historical action is associated with a same semantic as the recommendation.

According to several examples of the present application, it shall be noted with reference to directly above, that the term "same" is not necessarily to be understood as "identical" or "equal". Rather, by the term "same" as used directly above, it may also be comprised a predetermined deviation amount, for example a deviation by 1% or less, by 2% or less, by 5% or less, or by 10% or less, for example. Thus, in the examples as outlined directly above, the term "same" may also be understood as "similar", as long as a predetermined deviation amount is not exceeded, for example a deviation of 1%, of 2%, of 5% or of 10%, for example. For example, the expression "a same amount within a same time period" may also be understood as an amount that deviates from a reference amount by less than a predetermined deviation amount, for example by less than 5%. Additionally or alternatively, it may also be comprised of a time period that deviates from a reference time period by less than the same or another predetermined deviation amount, for example by less than 3%. Same error codes may also comprise different error codes that relate to a same component or to a same classification of error codes, for example error codes that are related to a temperature in a tank. Same alarms may also comprise different alarms that relate to a same component or to a same classification of alarms, for example alarms that are related to a temperature in a tank. Different parameters values may be considered as "same" as long as a predetermined deviation amount is not exceeded. Different time period durations may be considered as "same" as long as a predetermined deviation amount is not exceeded. Same processing steps may be processing steps where a same general action is performed, like a temperature increasement, as long as the different temperature increasements in different processing steps deviate by less than a predetermined deviation amount from each other.

Hence, different criteria may be considered to increase the reliability of safety evaluations.

According to several examples of the present disclosure, in view of the first aspect and the second aspect, one or both of the methods may further comprise obtaining a result from the evaluation and/or the further evaluation of the safety of the recommendation; and outputting the result from the evaluation and/or of the further evaluation of the safety of the recommendation.

Hence, a user may receive the output and may learn from the result to improve a control of the industrial plant.

According to several examples of the present disclosure, in view of the first aspect and the second aspect, one or both of the methods may further comprise receiving feedback on the output result; and providing the feedback to the Al-based model.

Hence, a safety of recommendations may be increased based on such feedback mechanism.

According to several examples of the present disclosure, in view of the first aspect and the second aspect, one or both of the methods may further comprise triggering the Al-based model to refine its knowledge of industry specific safety risks based on the provided feedback.

Hence, a safety of recommendations may be increased based on actively triggering the feedback implementation.

According to a third aspect, there is provided a data processing apparatus. The data processing apparatus comprises one or more processors being configured to carry out the method of the first aspect and/or of the second aspect.

According to a fourth aspect, there is provided a data processing system. The data processing system comprising a first apparatus of the third aspect configured to carry out the method according to the first aspect and/or a second apparatus of the third aspect configured to carry out the method according to the second aspect. Additionally or alternatively, the data processing system comprises means for carrying out the method of the first aspect and/or of the second aspect.

According to a fifth aspect, there is provided an industrial plant comprising a first apparatus of the third aspect configured to carry out the method according to the first aspect and/or a second apparatus of the third aspect configured to carry out the method according to the second aspect. Additionally or alternatively, the industrial plant comprises a data processing system of the fourth aspect.

By "industrial plant", according to several examples, it may be meant an industrial plant, autonomous industrial plant or industrial production plant, comprising one or more pipelines, production lines and/or assembly lines for transforming one or more educts into a product and/or for assembling one or more components into a final product for example. Additionally or alternatively, according to several examples, by "industrial plant" it may be meant an industrial plant in oil industry, in gas industry, in mining industry, in chemical industry, in pulp and paper industry, in metals industry, in wind and power industry, or in food and beverage industry.

According to a sixth aspect, there is provided a computer-readable medium comprising instructions which, when executed by a computing system, cause the computing system to perform the method of the first aspect and/or of the second aspect. The computer-readable medium may be transitory or non-transitory, volatile or non-volatile.

According to a seventh aspect, there is provided a computer program product comprising instructions which, when executed by a computing system, enable or cause the computing system to perform the method of the first aspect and/or of the second aspect. The computer program product may comprise a computer-readable medium comprising instructions of the computer program product.

According to an eight aspect, there is provided a use of a digital twin for evaluating a safety of a recommendation generated by an Al-based model in an industrial context. Additionally or alternatively, there is provided a use of at least one of a data processing apparatus of the third aspect, a data processing system of the fourth aspect, an industrial plant of the fifth aspect, a computer-readable medium of the sixth aspect, and a computer program product of the seventh aspect.

Each of the third aspect to the eight aspect is advantageous in several ways. For example, it is enabled to evaluate in a dynamic way potential risks before their application in practice. Thus, a safety in the application of Al-based recommendations is increased. Moreover, the evaluation of the safety of the recommendation can be operated in real-time, allowing operators to quickly assess the Al-generated recommendations. This may allow to reduce the burden on human experts who would otherwise have to manually evaluate the safety of each Al-generated recommendation. Furthermore, it is enabled to help industries to comply with recommendations and standards for Al-based models or systems. Additionally, due to a possibility of dual-layer risk assessment of historical database analysis and digital twin simulation, the accuracy of the safety evaluation (i.e. risk evaluation) could even further be enhanced.

Optional features of the first aspect and/or the second aspect may form part of any of the third aspect to the eight aspect, mutatis mutandis.

The computer-readable medium of the sixth aspect may have stored thereon the computer program product of the seventh aspect.

The term "obtaining", as used herein, may comprise, for example, receiving from another system, apparatus, device or process; receiving via an interaction with a user; loading or retrieving from storage or memory; measuring or capturing using sensors or other data acquisition devices, receiving or acquiring as a result from one or more data processing steps.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The specification may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates an architecture of an Al-based safety evaluation system according to several examples of the present disclosure;
- Figure 2 illustrates a flowchart indicative of a method according to several examples of the present disclosure;
- Figure 3 illustrates a flowchart indicative of a method according to several examples of the present disclosure;
- Figure 4 illustrates a block diagram schematically showing a data processing apparatus according to several examples of the present disclosure; and
- Figure 5 illustrates a block diagram schematically showing a data processing apparatus according to several examples of the present disclosure.

### DETAILED DESCRIPTION

According to several examples of the present disclosure, there is provided, for example, a system and method for evaluating the safety of decisions and suggestions generated by Artificial Intelligence (Al)-based models, like for example Large Language Models (LLMs)-based systems, in industrial plants through an online safety assessment process. The proposed framework may use a two-step approach:
1. Checking historical data for a) similar events, actions and their associated outcomes and/or for b) similar conditions (potentially) covered by existing risk assessment documentation (e.g., HAZOP, What-If analysis, Bow-Tie analysis).
2. If no similar events are identified or potential risks are found, then the system may conduct a simulation using a digital twin of the industrial plant to assess the potential outcomes of the LLM suggested actions.

Results of the safety evaluation may then be fed to the Al-based model, e.g. the LLM, through a feedback loop, enabling this way the Al-based model, e.g. the LLM, to enhance its understanding of industry specific safety risks and to improve its future recommendations. A safety report may be displayed on a User Interface (UI), thereby assisting the operators in making safe and informed decisions.

Therefore, by (i) comparing recommended actions to past similar events and risk assessment documentation and/or (ii) introducing a simulation module that utilizes digital twins, it can be evaluated in a dynamic way potential risks in a simulated environment before their application in practice.

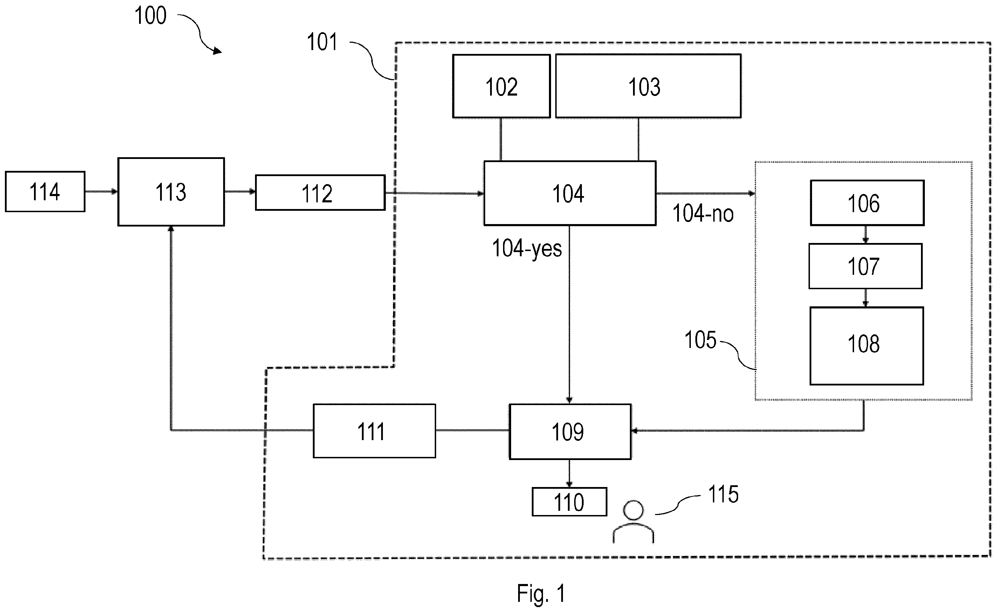

In the following, reference is made to Figure 1, which illustrates an architecture of an Al-based safety evaluation system according to several examples of the present disclosure, for example an architecture of an LLM-based safety evaluation system according to several examples of the present disclosure. However, it should be noted that the term "Al-based model" or "Al-based system" is not to be limited to "LLM-based model" or "LLM-based system". Rather, LLMs are to be understood as representing one example for an Al-based model or an Al-based system. For example, multimodal models may represent another example for an "Al-based model" or "Al-based system". Thus, when referring to Figure 1 in the following and when mentioning for example an "Al-based system", such "Al-based system" may be or comprise an LLM-based system and/or a multimodal model-based system for example.

With reference to Figure 1, reference number 100 represents a system for online safety evaluation of Al-based recommended suggestions or Al-based recommended actions. Reference number 101 represents an online safety evaluation framework. A process schematically illustrated starts at reference number 114 which represents a query that is input to an Al-based system represented by reference number 113. The process continues with recommended actions represented by reference number 112. It is schematically illustrated that the recommended actions 112 are input to the online safety evaluation framework 101. Reference numbers 102 to 111 and 115 are illustrated to participate in the online safety evaluation framework 101. In doing so, reference number 102 represents a historical event database. Reference number 103 represents risk assessment data (e.g. HAZOP, What-If, Bow-Tie). Reference number 104 represents to search for similar events and actions regarding the provided recommended actions 112. As indicated by reference number 104-no, if no similar events are identified OR if recommended actions resulted in unsafe conditions, the process continues at the digital twin simulation module represented by reference number 105. Reference number 106 represents a digital twin of an industrial plant, reference number 107 represents to perform a simulation and reference number 108 represents to assess a safety of resulting conditions. As indicated by reference number 104-yes, if similar events AND action recommendations resulted in safe conditions with low and/or acceptable risk, the process continues at the safety report represented by reference number 109. Reference number 110 represents a user interface that may display information to a user represented by reference number 115. Reference number 111 represents feedback to the Al-based system, e.g. to an LLM.

In the following, Figure 1 is described in more detail.

According to several examples of the present disclosure, in more detail and said in other words, this disclosure provides i.a. the system 100 for online safety evaluation of Al-based recommended suggestions or Al-based recommended actions 112, like LLM-recommended suggestions or LLM-recommended actions 112 for example, provided or outputted by the Al-based system 113, for example an LLM-based system. The evaluation, which may be executed or performed by use of the online safety evaluation framework 101 of the system 100, may be performed by using (i) analysis of historical data including historical events and historical actions, and/or using (ii) simulations with a digital twin. The historical data may be stored in the historical event database 102. Using (i) analysis of historical data may include using risk assessment documentation, wherein the risk assessment documentation may also be understood as risk assessment data 103 (e.g., HAZOP, What-If, Bow-Tie) that may be stored in the same historical event database 102 or in a separate database. When the Al-based system 113, e.g. an LLM-based system generates a recommendation as a response to the query 114, e.g. a user query 114 (made by the user 115 for example or by another user), the system 100 or the safety evaluation framework 101 or a data processing apparatus that runs the system 100 or the framework 101, once obtained the recommendation, may first look for similar past events and actions in the historical event database 102, i.e. the system 100 or framework 101 may search 104 for similar past events and actions. It may also be said that the system 100, the framework 101 or the data processing apparatus may first analyze the historical data and the risk assessment data 103 in order to identify similar past events and actions. Hence, it may be said that the historical data are indicative of one or more historical events occurred at one or more industrial plants and/or indicative of one or more historical actions related to historical events occurred at the one or more industrial plants. Moreover, it may be said that the risk assessment data 103 are indicative of one or more risks associated with the one or more historical events and/or indicative of one or more risks associated with the one or more historical actions. Additionally, the system 100, the framework 101 or the data processing apparatus may as well as look for similar conditions, i.e. may analyze the data to identify similar conditions already covered in risk assessment documentation (risk assessment data). If no matching historical data exists or if there is a high risk associated with past actions (i.e. step 104-no), then the system 100, the framework 101 or the data processing apparatus may transition to a real-time simulation using the digital twin 106, in particular the digital twin simulation module 105 provided in the framework 101 and/or accessible by the data processing apparatus, for example. The digital twin 106, that represents an accurate virtual representation of the physical industrial setting for which the query 114 was made, simulates 107 the Al-based model's suggested or recommended actions 112, e.g. the LLM's suggested or recommended actions. Through the simulation 107, the system 100, the framework 101 or the data processing apparatus computes the consequences of recommended actions, i.e. evaluates the recommended actions or recommendations in view of safety requirements for example, and identifies potential risks or safety issues that may arise if the Al-based model output, e.g. the LLM output was implemented in the actual setting (i.e. the physical industrial setting). The safety assessment results, for example the safety report 109, may be (i) presented to the user 115 through the UI 110 to enable better-informed decision making, and (ii) sent to the Al-based model or the Al-based system 113 through a feedback loop, i.e. by use of the feedback mechanism (feedback to the Al-based system) 111 for example, enabling the model's ability (the model that underlies the Al-based system, e.g. that underlies the LLM-based system) to refine its knowledge of industry specific safety risks. This way, the system 100, the framework 101 or the data processing apparatus can significantly enhance the safe deployment of Al-based models, e.g. LLMs in industry.

For reasons of understandability, with reference to the terms HAZOP, What-If and Bow-Tie as mentioned above, these represent methodologies that try to identify any risks that might arise in process industries and prevent safety hazards by looking into different scenarios. For example, a recommended action may be validated against HAZOP (Hazard and Operability Study) data. HAZOP data are created during the design phase of a process, including potential process deviations and corresponding recommended design. For example, to cope with the situation that a reactor with a cooling system lost its cooling, the recommended design is to have a back-up valve and a cooling flow meter; these will be documented in the HAZOP data. Later when the process is in production and a cooling problem has been detected, the recommended actions for the operator will be to check the cooling flow meter and to use the back-up valve when applicable. Other recommendations from the Al-based model, e.g. the LLM that may be valid generally but not applicable to this particular reactor, such as to have a second cooling flow loop, will be ruled out.

According to several examples of the present disclosure, in further detail, i.a. the proposed system may comprise the four following main components, wherein in the following, it shall be noted that instead of the LLM-based system, which is mentioned as an example for an Al-based system, other Al-based systems may be used, for example multimodal models (as already indicated above):
1) Search in Historical Databases (Historical Event Database 102 for example): The system 100 or framework 101 may include a searchable database (Historical Event Database 102 for example) containing records of past events and recommendations, along with associated outcomes. In addition, the 100 or framework 101 can search for relevant risk assessment data 103, if available (e.g., HAZOP, Bow-Ties). When the Al-based system 113 generates a recommendation, the system 100 or framework 101 may first query these databases to find similar past events (e.g., similar conditions and operator actions along with their consequences) and similar conditions already covered in risk assessment documents. If relevant events are found, the risk of the outcomes and any safety concerns are assessed.
2) Digital Twin Simulation Module 105: If no relevant events exist or if previous actions are associated with high risk or if the search 104 may be omitted and the application of the digital twin may represent the first step to use after obtainment of the recommendation, the system 100 or framework 101 may engage a digital twin 106 of the industrial environment to perform a simulation 107 with the current state of the industrial plant and apply the Al-based recommendations to the digital twin 106. The simulation module 105 operates in real-time, enabling the dynamic evaluation of potential risks.
3) Feedback Loop (feedback to the Al-based system) 111: The safety evaluation results - one or both from the historical data, documentation analysis and digital twin simulations - may be fed into the Al knowledge base of the Al-based system 113, e.g. into an LLM knowledge base of an LLM-based system. This feedback refines the decision-making process of the Al-based system 113, allowing to learn from past events and actions, and improve its future safety-aware recommendations.
4) Safety Report 109: The results from the online safety evaluation may be organized in a safety report 109 that summarizes the risks associated with the recommendations. This safety report 109 is presented to the user 115 via visualization of any identified risks, including risk levels and affected components of the industrial plant. This way, the user 115 can take risk-informed decisions on whether to implement the recommendations.

Hence, according to several examples of the present disclosure, the proposed system 100 offers a framework 101 for the safe integration of Al-based models or Al-based systems 113, like of LLMs or LLM-based systems for example, in industry by providing online safety evaluation of the Al-based output, e.g. the LLM output. The use of digital twins 106 ensures that first seen scenarios and untested recommendations undergo risk assessment through simulations before been applied in practice. Such a system 100 is applicable across industries, like manufacturing, oil and gas, chemical processing and power generation, where decisions can have a significant safety impact.

According to several examples of the present disclosure, an example workflow can be described by the following steps:
1. The Al-based system 113 generates a recommendation based on user input or query 114.
2. The Online Safety Evaluation Framework 101 queries the historical databases (historical event database 102 and database that comprises the risk assessment data 103) to search for similar events, risk assessment data and recommendations.
3. If relevant entries are found, then the previous outcomes are evaluated to identify any possible risks.
4. Alternatively, additionally or if no relevant entries are found or if the previous outcomes resulted in unsafe conditions, then the Digital Twin Simulation Module 105 simulates the Al-based system's recommended actions.
5. The simulation results are analyzed for potential risks and unsafe conditions.
6. A risk assessment report 109 is generated and displayed on the UI module 110, offering insights into potential risks.
7. The outcomes of the safety evaluation are fed back to the Al-based system 113 via the feedback loop 111.

Hence, according to several examples of the present disclosure, there is provided a method of combining historical events analysis 102, 104 and risk assessment documents (risk assessment data 103) with digital twin simulation 106, 107 to assess safety risks in real-time. There is further provided the use of digital twins 106 designed to assess the potential safety impacts of Al-based generated, e.g. LLM-generated suggestions in industrial settings. There is further provided the use of UI 110 to provide users 115 with a visual risk assessment report, e.g. safety report 109, enabling enhanced decision-making in accordance with proactive safety. There is further provided the feedback loop 111 that feeds the outcomes of the safety assessment to the Al-based system 113, enabling improved future safety-aware recommendations.

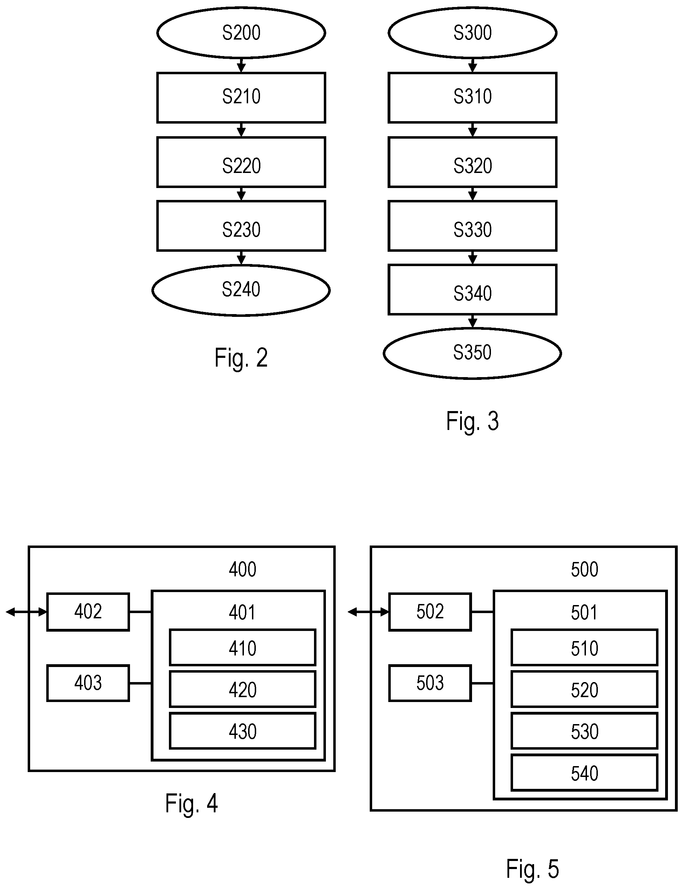

Referring now to Figure 2, Figure 2 illustrates a flowchart indicative of a method according to several examples of the present disclosure. The method is for evaluating a safety of a recommendation generated by an Al-based model, e.g. an LLM -based system in an industrial context. The method may comprise at least part of such method steps as outlined with reference to Figure 1. The method may be performed by such system 100 or data processing apparatus as mentioned with reference to Figure 1. The Al-based model may be such Al-based system 113 as outlined with reference to Figure 1. The recommendation for which a safety is to be evaluated may represent such recommended action 112 as outlined with reference to Figure 1.

The method starts in S200.

In S210, the method comprises obtaining the recommendation generated by the Al-based model, wherein the recommendation is related to an event occurred at a first industrial plant.

In S220, the method comprises analyzing historical data, and optionally also risk assessment data. The historical data are indicative of one or more historical events occurred at one or more industrial plants and/or indicative of one or more historical actions related to historical events occurred at the one or more industrial plants. The risk assessment data are indicative of one or more risks associated with the one or more historical events and/or indicative of one or more risks associated with the one or more historical actions. The analyzing the historical data comprises: identifying a historical event of the one or more historical events that is similar to the event and/or identifying a historical action of the one or more historical actions that is similar to the recommendation. The analyzing the historical data further comprises: identifying a first historical outcome resulting from the historical event and/or identifying a second historical outcome resulting from the historical action.

The analyzing may be understood to represent and/or correspond to such search 104 for similar events and actions as outlined with reference to Figure 1. The historical data may be data to be obtained from such historical event database 102 as outlined with reference to Figure 1. The risk assessment data may be such risk assessment data 103 as outlined with reference to Figure 1.

In S230, the method comprises evaluating the safety of the recommendation based on at least one of the first historical outcome and the second historical outcome, and optionally also based on the risk assessment data.

The method ends in S240.

According to several examples of the present disclosure, evaluating the safety may further comprise: evaluating the safety of the recommendation based on the first historical outcome if the result of the analyzing includes the similar historical event, and optionally, if a safety associated with the similar historical event is in a predetermined safety range; and/or evaluating the safety of the recommendation based on the second historical outcome if the result of the analyzing includes the similar historical action and optionally, if a safety associated with the similar historical action is in a predetermined safety range. Such safety range may be adjusted so that events or actions that are associated with a high risk, i.e. a risk that exceeds the predetermined safety range, may not be considered for the anallyzing, as outlined above with reference to Figure 1 in more detail.

According to several examples of the present disclosure, the method may further comprise: if the result of the analyzing comprises that no similar historical event has been identified and that no similar historical action has been identified, applying the recommendation at a digital twin of the first industrial plant by simulating an application of the recommendation with the digital twin; obtaining a simulated outcome as a result from the simulating; and evaluating the safety of the recommendation based on the simulated outcome.

Additionally or alternatively, according to several examples of the present disclosure, the method may further comprise: applying the recommendation at a digital twin of the first industrial plant by simulating an application of the recommendation with the digital twin; obtaining a simulated outcome as a result from the simulating; and evaluating the safety of the recommendation based on the simulated outcome. Hence, the if-feature "if the result of the analyzing comprises that no similar historical event has been identified and that no similar historical action has been identified" may be optional. In doing so, i.e. in case the if-feature is avoided or omitted, according to the first aspect, there may be a first evaluating result resulting from "evaluating the safety of the recommendation based on the risk assessment data and at least one of the first historical outcome and the second historical outcome" and a second evaluating result resulting from "evaluating the safety of the recommendation based on the simulated outcome". Hence, according to several examples of the present disclosure, the method may comprise a further evaluating step of further evaluating the safety of the recommendation based on comparing the first evaluating result and the second evaluating result.

Referring now to Figure 3, Figure 3 illustrates a flowchart indicative of a method according to several examples of the present disclosure. The method is for evaluating a safety of a recommendation generated by an Al-based model, e.g. an LLM-based system, in an industrial context. The method may comprise at least part of such method steps as outlined with reference to Figure 1. The method may be performed by such system 100 or data processing apparatus as mentioned with reference to Figure 1. The Al-based model may be such Al-based system 113 as outlined with reference to Figure 1. The recommendation for which a safety is to be evaluated may represent such recommended action 112 as outlined with reference to Figure 1.

The method starts in S300.

In S310, the method comprises obtaining the recommendation generated by the Al-based model, wherein the recommendation is related to an event occurred at a first industrial plant.

In S320, the method comprises applying the recommendation at a digital twin of the first industrial plant by simulating an application of the recommendation with the digital twin. The digital twin may be such digital twin 106 in a digital twin simulation module 105 as outlined with reference to Figure 1. The applying may represent such performing 107 as outlined with reference to Figure 1.

In S330, the method comprises obtaining a simulated outcome as a result from the simulating.

In S340, the method comprises evaluating, in a first evaluating process, the safety of the recommendation based on the simulated outcome. The evaluating may represent or correspond to such safety assessment 108 in the digital twin simulation module 105 as outlined with reference to Figure 1.

The method ends in S350.

According to several examples of the present disclosure, the method according to Figure 3 may further comprise analyzing, e.g. such search 104, historical data, and optionally also risk assessment data. The historical data, e.g. obtained from such historical even database 102, may be indicative of one or more historical events occurred at one or more industrial plants and/or indicative of one or more historical actions related to historical events occurred at the one or more industrial plants. The risk assessment data, e.g. such risk assessment data 103, may be indicative of one or more risks associated with the one or more historical events and/or indicative of one or more risks associated with the one or more historical actions. The analyzing the historical data may comprise: identifying a historical event of the one or more historical events that is similar to the event and/or identifying a historical action of the one or more historical actions that is similar to the recommendation. The analyzing the historical data may further comprise: identifying a first historical outcome resulting from the historical event and/or identifying a second historical outcome resulting from the historical action. The method according to the second aspect may further comprise evaluating, in a second evaluating process, the safety of the recommendation based on at least one of the first historical outcome and the second historical outcome, and optionally also based on the risk assessment data; and further evaluating the safety of the recommendation based on comparing a result of the first evaluating process with a result of the second evaluating process.

It shall be noted that the order of processing steps is not limited to the above-given example. Said in other words, although it is outline above that the first evaluating process is conducted first and that the second evaluating process is conducted second, this order may be changed and the first evaluating process may be conducted second and that the second evaluating process may be conducted first or both evaluating processes may be conducted in parallel.

The following is with reference to both the method according to Figure 2 and the method according to Figure 3.

According to several examples of the present disclosure, the one or more industrial plants may comprise at least one of the first industrial plant and a second industrial plant different from the first industrial plant.

According to several examples of the present disclosure, a historical event that is similar to the event may comprise at least one of:
- the historical event is associated with a same error code as the event,
- the historical event is associated with a same alarm as the event,
- the historical event is associated with a same sequence of alarms as the event,
- the historical event is associated with a same time series behavior as the event, for example a time series behaviour of one or more components of the industrial plant and/or of one or more parameters associated with the industrial plant, like key performance indicators, operational parameters, manufacturing parameters and processing parameters for example,
- the historical event is associated with a same industrial plant component as the event,
- the historical event is associated with a same pressure increase as the event, for example a same amount within a same time period,
- the historical event is associated with a same pressure decrease as the event, for example a same amount within a same time period,
- the historical event is associated with a same temperature increase as the event, for example a same amount within a same time period,
- the historical event is associated with a same temperature decrease as the event, for example a same amount within a same time period,
- the historical event is associated with a same processing step as the event, for example a processing step in a sequence of processing steps for manufacturing a certain product,
- the historical event is associated with a same sequence of processing steps as the event, and
- the historical event is associated with a same semantic as the event.

According to several examples of the present disclosure, a historical action that is similar to the recommendation may comprise at least one of:
- the historical action is associated with a same error code as the recommendation,
- the historical action is associated with a same alarm as the recommendation,
- the historical action is associated with a same sequence of alarms as the recommendation,
- the historical action is associated with a same time series behavior as the recommendation, for example a time series behaviour of one or more components of the industrial plant and/or of one or more parameters associated with the industrial plant, like key performance indicators, operational parameters, manufacturing parameters and processing parameters for example,
- the historical action is associated with a same industrial plant component as the recommendation,
- the historical action is associated with a same pressure increase as the recommendation, for example a same amount within a same time period,
- the historical action is associated with a same pressure decrease as the recommendation, for example a same amount within a same time period,
- the historical action is associated with a same temperature increase as the recommendation, for example a same amount within a same time period,
- the historical action is associated with a same temperature decrease as the recommendation, for example a same amount within a same time period,
- the historical action is associated with a same processing step as the recommendation, for example a processing step in a sequence of processing steps for manufacturing a certain product,
- the historical action is associated with a same sequence of processing steps as the recommendation, and
- the historical action is associated with a same semantic as the recommendation.

According to several examples of the present disclosure, one or both of the methods may further comprise obtaining a result from the evaluation and/or the further evaluation of the safety of the recommendation; and outputting the result, e.g. such safety report 109, from the evaluation and/or the further evaluation of the safety of the recommendation, outputting e.g. to the user 115.

According to several examples of the present disclosure, one or both of the methods may further comprise receiving feedback, e.g. via such UI 110, on the output result; and providing the feedback to the Al-based model, e.g. via the feedback mechanism 111.

According to several examples of the present disclosure, one or both of the methods may further comprise triggering the Al-based model to refine its knowledge of industry specific safety risks based on the provided feedback.

Referring now to Figure 4, Figure 4 shows a block diagram schematically illustrating a data processing apparatus 400 according to several examples of the present disclosure. In particular, there is provided an apparatus 400 for evaluating a safety of a recommendation generated by an Al-based model in an industrial context, as outlined above with reference to Figure 1. The apparatus 400 comprises one or more processors 401 being configured to carry out the method as outlined above with reference to Figure 2. The apparatus 400 may comprise means to function and/or run such system 100 or framework 101 as outlined above with reference to Figure 1.

In more detail, according to various examples, the apparatus 400 being configured to carry out the method of Figure 2 may comprise a processing circuitry, a processing function, a processing means, a processing unit or a processor 401, which enables the apparatus 400 to participate in evaluating a safety of a recommendation generated by an Al-based model in an industrial context. The processor 401 may comprise one or more processing portions or functions, wherein the processing portions or functions may be provided as one or more physical or virtual entities. The apparatus 400 may comprise one or more communication interfaces 402. The apparatus 400 may further comprise a memory or memory unit 403 for storing data, programs and/or instructions to be executed by the processor. The memory 403 may be a memory internal to the apparatus 400 or may be a memory external to the apparatus 400, for example at a cloud server. The processor 401 may comprise one or more portions, which enable the apparatus 400 to execute the method of Figure 2 for example. According to several examples of the present disclosure, an obtaining portion 410 may be configured to perform such obtaining according to S210 of Figure 2, an analyzing portion 420 may be configured to perform such analyzing according to S220 of Figure 2, and an evaluating portion 430 may be configured to perform such evaluating according to S230 of Figure 2.

According to several examples of the present disclosure, the respective portions of the apparatus 400 may also be understood as means for carrying out the certain function.

Referring now to Figure 5, Figure 5 shows a block diagram schematically illustrating a data processing apparatus 500 according to several examples of the present disclosure. In particular, there is provided an apparatus 500 for evaluating a safety of a recommendation generated by an Al-based model in an industrial context, as outlined above with reference to Figure 1. The apparatus 500 comprises one or more processors 501 being configured to carry out the method as outlined above with reference to Figure 3. The apparatus 500 may comprise means to function and/or run such system 100 or framework 101 as outlined above with reference to Figure 1.

In more detail, according to various examples, the apparatus 500 being configured to carry out the method of Figure 3 may comprise a processing circuitry, a processing function, a processing means, a processing unit or a processor 501, which enables the apparatus 500 to participate in evaluating a safety of a recommendation generated by an Al-based model in an industrial context. The processor 501 may comprise one or more processing portions or functions, wherein the processing portions or functions may be provided as one or more physical or virtual entities. The apparatus 500 may comprise one or more communication interfaces 502. The apparatus 500 may further comprise a memory or memory unit 503 for storing data, programs and/or instructions to be executed by the processor. The memory 503 may be a memory internal to the apparatus 500 or may be a memory external to the apparatus 500, for example at a cloud server. The processor 501 may comprise one or more portions, which enable the apparatus 500 to execute the method of Figure 3 for example. According to several examples of the present disclosure, an obtaining portion 510 may be configured to perform such obtaining according to S310 of Figure 3, an applying portion 520 may be configured to perform such applying according to S320 of Figure 3, an obtaining portion 530 may be configured to perform such obtaining according to S330 of Figure 3, and an evaluating portion 540 may be configured to perform such evaluating according to S340 of Figure 3.

According to several examples of the present disclosure, the respective portions of the apparatus 500 may also be understood as means for carrying out the certain function.

According to several examples of the present disclosure, there is provided a data processing system for evaluating a safety of a recommendation generated by an Al-based model in an industrial context. The data processing system comprises the apparatus 400 according to Figure 4 and/or the apparatus 500 according to Figure 5. Additionally or alternatively, the data processing system comprises means for carrying out the method according to Figure 2 and/or according to Figure 3. The data processing system may be such system 100 as illustrated with reference to Figure 1.

According to several examples of the present disclosure, there is provided an industrial plant comprising the apparatus 400 according to Figure 4, the apparatus 500 according to Figure 5 and/or the data processing system as outlined above.

According to several examples of the present disclosure, there is provided a computer-readable medium comprising instructions which, when executed by a computing system, causes the computing system to perform the method as outlined with reference to Figure 2 and/or Figure 3. The computer-readable medium may be transitory or non-transitory, volatile or non-volatile.

According to several examples of the present disclosure, there is provided a computer program product comprising instructions which, when executed by a computing system, enable or cause the computing system to perform the method as outlined with reference to Figure 2 and/or Figure 3. The computer program product may comprise a computer-readable medium comprising instructions of the computer program product. The computer-readable medium as mentioned above may have stored thereon the computer program product.

According to several examples of the present disclosure, there is provided a use of a digital twin for evaluating a safety of a recommendation generated by an Al-based model in an industrial context. The digital twin may comprise such digital twin 106 as outlined above with reference to Figure 1. There is further discloses a use of at least one of the apparatus 400, the apparatus 500, the data processing system as outlined above, the industrial plant as outlined above, the computer-readable medium as outlined above, and the computer program product as outlined above. In particular, there is provided use of the method as outlined with reference to Figure 2 and/or Figure 3 to enable evaluating a safety of a recommendation generated by an Al-based model in an industrial context.

Optional features of the method(s) as outlined with reference to any one of Figures 1 to 3 may form part of the apparatus 400, the apparatus 500, the data processing system, the industrial plant, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to devices. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for evaluating a safety of a recommendation generated by an artificial intelligence, Al, -based model in an industrial context, the method comprising:
- obtaining (S310) the recommendation generated by the Al-based model, wherein the recommendation is related to an event occurred at a first industrial plant;
- applying (S320) the recommendation at a digital twin of the first industrial plant by simulating an application of the recommendation with the digital twin;
- obtaining (S330) a simulated outcome as a result from the simulating; and
- evaluating (S340), in a first evaluating process, the safety of the recommendation based on the simulated outcome.

2. The method according to claim 1, further comprising:
analyzing historical data,
wherein the historical data are indicative of one or more historical events occurred at one or more industrial plants and/or indicative of one or more historical actions related to historical events occurred at the one or more industrial plants,
wherein analyzing the historical data comprises: identifying a historical event of the one or more historical events that is similar to the event and/or identifying a historical action of the one or more historical actions that is similar to the recommendation,
wherein analyzing the historical data further comprises: identifying a first historical outcome resulting from the historical event and/or identifying a second historical outcome resulting from the historical action;
evaluating, in a second evaluating process, the safety of the recommendation based on at least one of the first historical outcome and the second historical outcome; and
further evaluating the safety of the recommendation based on comparing a result of the first evaluating process with a result of the second evaluating process.

3. The method according to claim 2, further comprising
analyzing risk assessment data, wherein the risk assessment data are indicative of one or more risks associated with the one or more historical events and/or indicative of one or more risks associated with the one or more historical actions,
wherein evaluating the safety of the recommendation comprises evaluating the safety of the recommendation based on the risk assessment data and at least one of the first historical outcome and the second historical outcome.

4. A method for evaluating a safety of a recommendation generated by an artificial intelligence, Al, -based model in an industrial context, the method comprising:
- obtaining (S210) the recommendation generated by the Al-based model, wherein the recommendation is related to an event occurred at a first industrial plant;
- analyzing (S220) historical data,
wherein the historical data are indicative of one or more historical events occurred at one or more industrial plants and/or indicative of one or more historical actions related to historical events occurred at the one or more industrial plants,
wherein analyzing the historical data comprises: identifying a historical event of the one or more historical events that is similar to the event and/or identifying a historical action of the one or more historical actions that is similar to the recommendation,
wherein analyzing the historical data further comprises: identifying a first historical outcome resulting from the historical event and/or identifying a second historical outcome resulting from the historical action; and
- evaluating (S230) the safety of the recommendation based on at least one of the first historical outcome and the second historical outcome.

5. The method according to claim 4, further comprising
analyzing risk assessment data, wherein the risk assessment data are indicative of one or more risks associated with the one or more historical events and/or indicative of one or more risks associated with the one or more historical actions,
wherein evaluating the safety of the recommendation comprises evaluating the safety of the recommendation based on the risk assessment data and at least one of the first historical outcome and the second historical outcome.

6. The method according to claim 4 or 5, wherein evaluating the safety further comprises:
evaluating the safety of the recommendation based on the first historical outcome if the result of the analyzing includes the similar historical event;
evaluating the safety of the recommendation based on the second historical outcome if the result of the analyzing includes the similar historical action.

7. The method according to any of claims 4 to 6, wherein the method further comprises:
if the result of the analyzing comprises that no similar historical event has been identified and that no similar historical action has been identified,
applying the recommendation at a digital twin of the first industrial plant by simulating an application of the recommendation with the digital twin;
obtaining a simulated outcome as a result from the simulating; and
evaluating the safety of the recommendation based on the simulated outcome.

8. The method according to any of claims 1 to 7, wherein the one or more industrial plants comprise at least one of the first industrial plant and a second industrial plant different from the first industrial plant.

9. The method according to any of claims 1 to 8, wherein a historical event that is similar to the event comprises at least one of:
- the historical event is associated with a same error code as the event,
- the historical event is associated with a same alarm as the event,
- the historical event is associated with a same sequence of alarms as the event,
- the historical event is associated with a same time series behavior as the event,
- the historical event is associated with a same industrial plant component as the event,
- the historical event is associated with a same pressure increase as the event,
- the historical event is associated with a same pressure decrease as the event,
- the historical event is associated with a same temperature increase as the event,
- the historical event is associated with a same temperature decrease as the event,
- the historical event is associated with a same processing step as the event,
- the historical event is associated with a same sequence of processing steps as the event, and
- the historical event is associated with a same semantic as the event.

10. The method according to any of claims 1 to 9, wherein a historical action that is similar to the recommendation comprises at least one of:
- the historical action is associated with a same error code as the recommendation,
- the historical action is associated with a same alarm as the recommendation,
- the historical action is associated with a same sequence of alarms as the recommendation,
- the historical action is associated with a same time series behavior as the recommendation,
- the historical action is associated with a same industrial plant component as the recommendation,
- the historical action is associated with a same pressure increase as the recommendation,
- the historical action is associated with a same pressure decrease as the recommendation,
- the historical action is associated with a same temperature increase as the recommendation,
- the historical action is associated with a same temperature decrease as the recommendation,
- the historical action is associated with a same processing step as the recommendation,
- the historical action is associated with a same sequence of processing steps as the recommendation, and
- the historical action is associated with a same semantic as the recommendation.

11. The method according to claim 2 or 6, wherein evaluating the safety further comprises:
evaluating the safety of the recommendation based on the first historical outcome if the result of the analyzing includes the similar historical event and if a safety associated with the similar historical event is in a predetermined safety range;
evaluating the safety of the recommendation based on the second historical outcome if the result of the analyzing includes the similar historical action and if a safety associated with the similar historical action is in a predetermined safety range.

12. The method according to any of claims 1 to 11, wherein the method further comprises:
outputting a result from the evaluation and/or the further evaluation of the safety of the recommendation;
receiving feedback on the output result;
providing the feedback to the Al-based model;
triggering the Al-based model to refine its knowledge of industry specific safety risks based on the provided feedback.

13. A data processing apparatus (400; 500) comprising one or more processors being configured to carry out the method according to any of claims 1 to 3 and 8 to 12 and/or to carry out the method according to any of claims 4 to 12.

14. A computer program product comprising instructions which, when executed by a computing system, enable and/or cause the computing system to perform the method according to any of claims 1 to 3 and 8 to 12 and/or to perform the method according to any of claims 4 to 12.

15. A computer-readable medium having stored thereon the computer program product according to claim 14.
